# EUROPÄISCHE PATENTSCHRIFT

(11) **EP 4 463 348 B1**
(45) Veröffentlichungstag und Bekanntmachung des Hinweises auf die Patenterteilung: **03.06.2026**
(21) Anmeldenummer: 23716414.0
(22) Anmeldetag: 24.03.2023
(51) Int. Cl.: B61H 5/00, B61C 9/48, B60B 35/14, B60B 37/06

(54) **FAHRWERK FÜR SCHIENENFAHRZEUGE**
CHASSIS FOR RAIL VEHICLES
CHÂSSIS POUR VÉHICULES FERROVIAIRES

(30) Priorität: 30.03.2022 AT 502072022
(43) Veröffentlichungstag der Anmeldung: 20.11.2024
(73) Patentinhaber: Siemens Mobility Austria GmbH, 1210 Wien (AT)
(72) Erfinder: RIEGER, Martin, 8311 Markt Hartmannsdorf (AT); STINE, Gerhard, 8044 Weinitzen (AT)
(74) Vertreter: Siemens Patent Attorneys
(86) Internationale Anmeldenummer: PCT/EP2023/057616
(87) Internationale Veröffentlichungsnummer: WO 2023/186725

(56) Entgegenhaltungen:
- EP-B1- 0 308 616
- EP-B1- 0 589 865
- CH-A5- 663 387
- CN-A- 113 677 541

## Beschreibung

Die Erfindung betrifft ein Fahrwerk für Schienenfahrzeuge mit einem Fahrwerksrahmen, zumindest einem Antriebsmotor, zumindest einem Getriebe und zumindest einem ersten Radsatz, welcher drehbar mit dem Fahrwerksrahmen gekoppelt ist, wobei der zumindest eine Antriebsmotor mit dem Fahrwerksrahmen verbunden ist und wobei zur Drehmomentübertragung von dem zumindest einen Antriebsmotor über das zumindest eine Getriebe auf den zumindest ersten Radsatz der zumindest eine Antriebsmotor mit dem zumindest einen Getriebe und das zumindest eine Getriebe mit dem zumindest ersten Radsatz gekoppelt ist.

An Schienenfahrzeuge sind hohe Anforderungen im Hinblick auf Energieeffizienz, ökologische Verträglichkeit sowie Belastung einer Infrastruktur (z.B. eines Gleiskörpers) gestellt. Fahrwerke sind wesentliche Komponenten eines Schienenfahrzeugs. Leichtbaumaßnahmen in Konstruktion und Fertigung von Fahrwerken leisten einen wichtigen Beitrag zur Erfüllung der oben genannten Anforderungen.

Eine Reduktion von ungefederten Massen von Fahrwerken, also Massen von Komponenten wie z.B. Radsätzen, welche den Gleiskörper ohne eine mechanische entkoppelnde Federwirkung belasten, ist im Hinblick auf eine Entlastung des Gleiskörpers von großer Bedeutung, um eine Verringerung von Gleisschäden und -Verschleiß zu erreichen.

In diesem Zusammenhang sind auch auf Radsätzen gelagerte Bremsscheiben zu nennen, welche aufgrund ihrer hohen Massen (bis zu 130 kg je Bremsscheibe) einen großen Anteil an den ungefederten Massen von Fahrwerken haben.

Aus dem Stand der Technik ist beispielsweise die WO 2020/169567 A1 bekannt, welche einen Leichtbauradsatz für ein Fahrwerk eines Schienenfahrzeugs mit einer Mehrzahl von lösbar miteinander und zu einer Radsatzwelle verbundenen Radsatzwellenteilen zeigt. Die Radsatzwelle weist einen Hohlraum auf, welcher zur Schadensdetektion mit einem Fluid befüllbar ist.

Weiterhin offenbart die WO 2022/023214 A1 eine fluidische Überwachungseinrichtung eines Radsatzes eines Fahrwerks eines Schienenfahrzeugs. An einer Stirnseite des Radsatzes ist zur Ermittlung von Fluidmasseverlusten in einem Hohlraum des Radsatzes eine Sensoreinrichtung vorgesehen.

Ferner ist in der WO 2021/244971 A1 ein Fahrwerk für ein Schienenfahrzeug beschrieben, bei welchem ein Antriebsmotor mit einem Fahrwerksrahmen sowie mit einer radsatzgelagerten Fahrwerkskomponente, z.B. mit einem Getriebe, verbunden ist.

Aus der EP 0308616 B1 ist ein Fahrwerk für ein Schienenfahrzeug bekannt, wobei eine Bremsscheibe an einer Hohlwelle angeordnet ist und die Hohlwelle mit einer Gelenkkupplung mit dem Radsatz verbunden ist.

Die genannten Ansätze weisen in ihren bekannten Formen den Nachteil auf, dass keine Konstruktionslösungen im Zusammenhang mit Fahrwerksbremsen im Hinblick auf eine Senkung ungefederter Massen ersichtlich sind.

Der Erfindung liegt die Aufgabe zugrunde, ein gegenüber dem Stand der Technik weiterentwickeltes Fahrwerk mit einer Fahrwerksbremsanordnung, welche zu einer Senkung ungefederter Massen des Fahrwerks beiträgt, anzugeben.

Erfindungsgemäß wird diese Aufgabe gelöst mit einem Fahrwerk nach Anspruch 1, bei dem mit einer Getriebewelle des zumindest einen Getriebes zumindest eine Bremsscheibe verbunden ist, wobei zumindest ein mit der zumindest einen Bremsscheibe in Kontakt bringbarer Bremsaktuator mit einem Getriebegehäuse des zumindest einen Getriebes verbunden ist. Durch diese Maßnahme kann auf eine Bremsscheibe auf dem ersten Radsatz verzichtet werden oder es kann die Anzahl an Bremsscheiben auf dem ersten Radsatz reduziert werden. Dadurch werden Radsatzmassen deutlich verringert. Wenn das Fahrwerk eine Primärfederung zwischen dem ersten Radsatz und dem Fahrwerksrahmen aufweist, dann wird eine mechanische Entkopplung der Bremsscheibe von dem ersten Radsatz erreicht, da das Getriebe mit dem Antriebsmotor gekoppelt ist und der Antriebsmotor mit dem Fahrwerksrahmen verbunden ist. Der Bremsaktuator ist mit dem Getriebegehäuse verbunden, wodurch eine kompakte und somit platzsparende Anordnung von Antriebsmotor, Getriebe und Bremse erzielt wird. Diese platzsparende Anordnung ermöglicht einen Einsatz eines rohrförmigen Leichtbauradsatzes mit großem Durchmesser und somit hohem Flächenträgheitsmoment.

Weitere vorteilhafte Ausgestaltungen des erfindungsgemäßen Fahrwerks ergeben sich aus den Unteransprüchen.

Günstig ist es beispielsweise, wenn der zumindest eine Bremsaktuator über dessen Verbindung mit dem Getriebegehäuse hinaus mit einer anderen Komponente des Fahrwerks oder anderen Komponenten des Fahrwerks als dem Getriebegehäuse lediglich mittelbar, über das Getriebegehäuse strukturell verbunden ist.

Dadurch wird eine konzentrierte Einleitung von Antriebs- und Bremsmomenten in den Fahrwerksrahmen erreicht. Eine von der Einleitung von Antriebsmomenten örtlich unabhängige Einleitung von Bremsmomenten in den Fahrwerksrahmen erfolgt nicht, da der Bremsaktuator keine unmittelbare strukturelle Verbindung mit dem Fahrwerksrahmen aufweist.

Eine Vorzugslösung erhält man, wenn der zumindest eine Antriebsmotor als Asynchronmotor ausgebildet ist. Der Asynchronmotor ist tauglich für hohe Drehzahlen. Durch ein hohes Motordrehzahlniveau kann zur Erreichung einer definierten Motorleistung ein Motordrehmomentniveau gesenkt werden, da es sich bei einer Motordrehzahl und einem Motordrehmoment um Faktoren einer bekannten Bildungsvorschrift für die Motorleistung handelt. Durch Senkung des Motordrehmomentniveaus kann der Antriebsmotor kompakter und leichter ausgeführt werden. Ein kompakter Antriebsmotor kann beispielsweise eine geringe Höhenerstreckung des Antriebsmotors bedeuten, wodurch z.B. eine Fußbodenhöhe eines Wagenkastens, unter welchem das Fahrwerk angeordnet sein kann, verringert, eine einfachere Kabelführung im Bereich des Fahrwerks ermöglicht und/oder der Wagenkasten strukturell vereinfacht werden kann.

Hilfreich ist es ferner, wenn der zumindest erste Radsatz eine rohrförmig ausgeführte Radsatzwelle aufweist.

Durch diese Maßnahme wird eine Radsatzmassenreduktion bei einer hohen Festigkeit des ersten Radsatzes bewirkt. Zusammen mit anderen, oben genannten Maßnahmen kann dadurch eine Reduktion einer Gesamtfahrwerksmasse um ca. 10% und eine Reduktion ungefederter Fahrwerksmassen um ca. 20% ermöglicht werden.

Die Radsatzwelle kann beispielsweise als geschmiedetes oder gezogenes Rohr ausgebildet sein.

Eine fluidbasierende Detektion von Fehlern oder Schäden des ersten Radsatzes wird ermöglicht, wenn die Radsatzwelle, zur Befüllung mit einem Fluid, abgedichtet ausgeführt ist.

Das Fluid kann beispielsweise Druckluft sein.

Im Zusammenhang mit der fluidbasierenden Detektion von Fehlern oder Schäden des ersten Radsatzes ist es günstig, wenn mit dem zumindest ersten Radsatz zumindest ein erster Sensor zur Ermittlung von Fluidmasseverlusten in einem Hohlraum der Radsatzwelle verbunden ist.

Durch diese Maßnahme können beispielsweise Durchrisse oder sich unbeabsichtigt bildende Öffnungen der Radsatzwelle anhand aus der Radsatzwelle ausströmenden Fluids erkannt werden. Dadurch wird eine Sicherheitssteigerung erzielt. Eine Reparatur oder ein Tausch der Radsatzwelle kann zeitgerecht organisiert werden.

Eine Ermittlung von Fluidmasseverlusten kann beispielsweise über Druckmessungen des Fluids mittels eines Drucksensors oder kombinierte Druck- und Temperaturmessungen des Fluids mittels eines Drucksensors und eines Temperatursensors etc. realisiert werden.

Eine vorteilhafte Lösung wird weiterhin erreicht, wenn die Radsatzwelle mit einem ersten Rad und einem zweiten Rad des zumindest ersten Radsatzes verschraubt ist.

Dadurch kann auf einen Pressverband zwischen dem ersten Rad und dem zweiten Rad einerseits und der Radsatzwelle andererseits verzichtet werden. Ein Tausch des ersten Rads und des zweiten Rads kann mit einfachen Montagewerkzeugen (z.B. Drehmomentschlüssel) erfolgen. Eine Radsatzpresse oder induktive Wärmeöfen (zur Erzeugung des Pressverbands) sind nicht erforderlich.

Ein modularer erster Radsatz, bei welchem einzelne Teile separat getauscht werden können, wird erreicht, wenn die Radsatzwelle zumindest ein erstes Wellenteil, ein zweites Wellenteil und ein drittes Wellenteil aufweist, wobei das erste Wellenteil dem ersten Rad und dem zweiten Rad zwischengeordnet ist, wobei das zweite Wellenteil und das dritte Wellenteil außerhalb eines von dem ersten Rad und dem zweiten Rad begrenzten Bereichs angeordnet sind und wobei das erste Wellenteil mit dem ersten Rad und dem zweiten Rad, das zweite Wellenteil mit dem ersten Rad und das dritte Wellenteil mit dem zweiten Rad verbunden ist.

Im Zusammenhang mit dem modularen ersten Radsatz ist es günstig, wenn zumindest das erste Rad mittels Schrauben mit dem ersten Wellenteil und dem zweiten Wellenteil verbunden ist, wobei die Schrauben von dem zweiten Wellenteil durch das erste Rad hindurch in das erste Wellenteil geführt angeordnet sind.

Durch diese Maßnahme kann eine Anzahl erforderlicher Verbindungsmittel zwischen dem ersten Rad einerseits sowie dem ersten Wellenteil und dem zweiten Wellenteil andererseits reduziert werden.

Erfindungsgemäß wird ein kompakter Antriebsstrang erreicht, wenn eine Antriebswelle des zumindest einen Antriebsmotors mit der Getriebewelle gekoppelt ist, wobei die Getriebewelle mit einem ersten Zahnrad, welches mit dem zumindest ersten Radsatz verbunden ist, gekoppelt ist.

In diesem Zusammenhang ist es besonders hilfreich, wenn die Antriebswelle parallel oder annähernd parallel zu einer Fahrwerksquerachse ausgerichtet ist.

Durch diese Maßnahme wird ein quer zu der Fahrwerksquerachse verfügbares Bauraumbudget vergrößert, welches beispielsweise für eine Durchmesservergrößerung des ersten Radsatzes genutzt werden kann.

Nachfolgend wird die Erfindung anhand eines Ausführungsbeispiels näher erläutert.

Es zeigt beispielhaft:

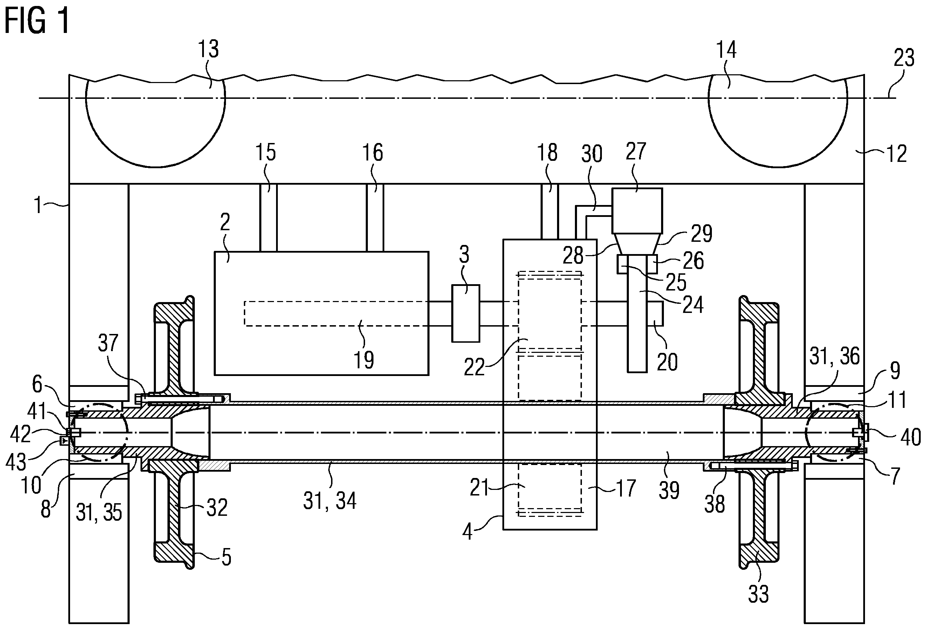

- Fig. 1:: Einen schematischen Grundriss eines Ausschnitts aus einer beispielhaften Ausführungsvariante eines erfindungsgemäßen Fahrwerks mit einem Leichtbauradsatz, wobei mit einer Getriebewelle eine Bremsscheibe und mit einem Getriebegehäuse ein Bremsaktuator verbunden ist.

Ein in Fig. 1 dargestellter, schematischer Grundriss zeigt einen Ausschnitt aus einer beispielhaften Ausführungsvariante eines erfindungsgemäßen Fahrwerks eines Schienenfahrzeugs. Das Fahrwerk weist einen Fahrwerksrahmen 1, eine erste Antriebs-Bremsanordnung, welche einen als hochdrehenden Asynchronmotor ausgebildeten Antriebsmotor 2, eine Kupplung 3, ein Getriebe 4 mit hoher Übersetzung und eine mit dem Getriebe 4 gekoppelte Fahrwerksbremse umfasst, sowie eine konstruktiv, verbindungstechnisch und funktionell gleich wie die erste Antriebs-Bremsanordnung ausgebildete, in Fig. 1 nicht dargestellte zweite Antriebs-Bremsanordnung auf. Ferner umfasst das Fahrwerk einen ersten Radsatz 5 und einen in Fig. 1 nicht gezeigten zweiten Radsatz. Der erste Radsatz 5 ist über eine erste Radsatzführungsvorrichtung mit einem ersten Radsatzlager 6, welches von einem ersten Radsatzlagergehäuse 8 ummantelt ist, sowie über eine zweite Radsatzführungsvorrichtung mit einem zweiten Radsatzlager 7, welches von einem zweiten Radsatzlagergehäuse 9 ummantelt ist, drehbar mit dem Fahrwerksrahmen 1 gekoppelt. Der zweite Radsatz ist nach gleichem Prinzip drehbar mit dem Fahrwerksrahmen 1 gekoppelt.

Der Fahrwerksrahmen 1 ist zusätzlich über eine erste Primärfeder 10 mit dem ersten Radsatzlagergehäuse 8 und über eine zweite Primärfeder 11 mit dem zweiten Radsatzlagergehäuse 9 verbunden. Der Fahrwerksrahmen 1 ist ferner über zwei weitere Primärfedern, welche in Fig. 1 nicht dargestellt sind, mit dem zweiten Radsatz verbunden. Der Fahrwerksrahmen 1 ist somit primärgefedert mit dem ersten Radsatz 5 und dem zweiten Radsatz verbunden. Über eine mit einem Querträger 12 des Fahrwerksrahmens 1 verbundene erste Sekundärfeder 13 und eine ebenfalls mit dem Querträger 12 des Fahrwerksrahmens 1 verbundene zweite Sekundärfeder 14 ist das Fahrwerk mit einem in Fig. 1 nicht gezeigten Wagenkasten des Schienenfahrzeugs gekoppelt.

Der Antriebsmotor 2 ist über ein erstes Motorlager 15 und ein zweites Motorlager 16 mit dem Querträger 12 verbunden. Das Getriebe 4 ist über ein Getriebegehäuse 17 des Getriebes 4 und eine Drehmomentstütze 18 mit dem Querträger 12 verbunden. Zur Drehmomentübertragung von dem Antriebsmotor 2 über das Getriebe 4 auf den ersten Radsatz 5 ist der Antriebsmotor 2 über die Kupplung 3 mit dem Getriebe 4 und das Getriebe 4 mit dem ersten Radsatz 5 gekoppelt.

Hierzu ist eine Antriebswelle 19 des Antriebsmotors 2 über die Kupplung 3 mit der Getriebewelle 20 gekoppelt, wobei die Getriebewelle 20 mit einem ersten Zahnrad 21, welches mit dem ersten Radsatz 5 verbunden ist, gekoppelt ist. Das erste Zahnrad 21 ist mit einem mit der Getriebewelle 20 verbundenen zweiten Zahnrad 22 verzahnt.

Die Antriebswelle 19 und die Getriebewelle 20 sind parallel zu einer Fahrwerksquerachse 23 ausgerichtet.

Das Getriebegehäuse 17 ummantelt das erste Zahnrad 21 und das zweite Zahnrad 22. Die Getriebewelle 20 ist durch das Getriebegehäuse 17 hindurchgeführt.

Die zweite Antriebs-Bremsanordnung ist nach gleichem Prinzip mit dem Fahrwerksrahmen 1 verbunden und mit dem zweiten Radsatz gekoppelt.

Außerhalb des Getriebegehäuses 17 ist auf einer dem Antriebsmotor 2 und der Kupplung 3 abgewandten Seite des Getriebes 4 eine Bremsscheibe 24 der Fahrwerksbremse mit der Getriebewelle 20 verbunden. Mit der Bremsscheibe 24 sind in einem in Fig. 1 gezeigten Bremszustand ein erster Bremsbelag 25 und ein zweiter Bremsbelag 26 eines Bremsaktuators 27 der Fahrwerksbremse in Kontakt gebracht, wodurch das Fahrwerk bzw. das Schienenfahrzeug gebremst wird. In einem in Fig. 1 nicht dargestellten Lösezustand der Fahrwerksbremse sind der erste Bremsbelag 25 und der zweite Bremsbelag 26 von der Bremsscheibe 24 gelöst.

Der Bremsaktuator 27 ist als pneumatischer Bremszylinder, welcher über in Fig. 1 nicht dargestellte Druckluftleitungen mit einer in Fig. 1 ebenfalls nicht gezeigten Druckluftversorgungseinrichtung des Schienenfahrzeugs pneumatisch (d.h. nicht strukturell) verbunden ist, mit einem in Fig. 1 nicht sichtbaren Bremskolben ausgeführt, welcher auf einen drehbar gelagerten ersten Bremshebel 28 des Bremsaktuators 27, mit welchem der erste Bremsbelag 25 verbunden ist, und auf einen drehbar gelagerten zweiten Bremshebel 29 des Bremsaktuators 27, mit welchem der zweite Bremsbelag 26 verbunden ist, wirkt. Über den ersten Bremshebel 28 und den zweiten Bremshebel 29 sind der erste Bremsbelag 25 und der zweite Bremsbelag 26 schwenkbar.

Der Bremsaktuator 27 ist über einen Tragarm 30 mit dem Getriebegehäuse 17 verbunden. Über dessen Verbindung mit dem Getriebegehäuse 17 hinaus ist der Bremsaktuator 27 lediglich mittelbar, nämlich über das Getriebegehäuse 17, mit einer anderen Komponente des Fahrwerks als dem Getriebegehäuse 17, nämlich mit dem Fahrwerksrahmen 1, strukturell verbunden.

Der erste Radsatz 5 ist als Leichtbauradsatz für eine Radsatzlast von 13,5 t ausgeführt und weist eine rohrförmige, dünnwandige Radsatzwelle 31 auf.

Die Radsatzwelle 31 ist mit einem ersten Rad 32 und einem zweiten Rad 33 des ersten Radsatzes 5 verschraubt und weist ein erstes Wellenteil 34, ein zweites Wellenteil 35 und ein drittes Wellenteil 36 auf, welche als gezogene Metallrohre ausgebildet sind. Das erste Wellenteil 34 ist dem ersten Rad 32 und dem zweiten Rad 33 zwischengeordnet. Das zweite Wellenteil 35 und das dritte Wellenteil 36 sind außerhalb eines von dem ersten Rad 32 und dem zweiten Rad 33 begrenzten Bereichs angeordnet. Das erste Wellenteil 34 ist mit dem ersten Rad 32 und dem zweiten Rad 33, das zweite Wellenteil 35 mit dem ersten Rad 32 und das dritte Wellenteil 36 mit dem zweiten Rad 33 verbunden.

Das erste Rad 32 ist auf das zweite Wellenteil 35, das zweite Rad 33 auf das dritte Wellenteil 36 aufgeschoben, jedoch nicht aufgepresst.

Das erste Rad 32 ist mittels einer ersten Schraube 37 mit dem ersten Wellenteil 34 und dem zweiten Wellenteil 35 verbunden, wobei die erste Schraube 37 von dem zweiten Wellenteil 35 durch das erste Rad 32 hindurch in das erste Wellenteil 34 geführt angeordnet ist.

Das zweite Rad 33 ist mittels einer zweiten Schraube 38 mit dem ersten Wellenteil 34 und dem dritten Wellenteil 36 verbunden, wobei die zweite Schraube 38 von dem dritten Wellenteil 36 durch das zweite Rad 33 hindurch in das erste Wellenteil 34 geführt angeordnet ist.

Zwischen dem ersten Rad 32, dem ersten Wellenteil 34 und dem zweiten Wellenteil 35 sowie zwischen dem zweiten Rad 33, dem ersten Wellenteil 34 und dem dritten Wellenteil 36 sind weitere Schrauben angeordnet, welche in Fig. 1 nicht sichtbar sind.

Die erste Schraube 37, die zweite Schraube 38 und die weiteren Schrauben sind in Durchgangsbohrungen in dem ersten Rad 32, dem zweiten Rad 33, dem zweiten Wellenteil 35 und dem dritten Wellenteil 36 sowie in Sacklochbohrungen in dem ersten Wellenteil 34 eingeführt.

Das erste Radsatzlager 6 ist mit dem zweiten Wellenteil 35 verbunden, das zweite Radsatzlager 7 mit dem dritten Wellenteil 36. Das zweite Wellenteil 35 und das dritte Wellenteil 36 fungieren als Endabschnitte des ersten Radsatzes 5.

Die Radsatzwelle 31 ist zur Befüllung mit einem Fluid abgedichtet ausgeführt. In Fig. 1 ist ein Hohlraum 39 der Radsatzwelle 31 mit Fluid gefüllt, wobei das Fluid Druckluft ist. Eine Belüftung oder Entlüftung der Radsatzwelle 31 kann über eine mit einem Verschluss 40 dicht verschlossene Öffnung, welche stirnseitig in dem dritten Wellenteil 36 angeordnet ist, erfolgen.

Mit dem ersten Radsatz 5 sind ein erster Sensor 41 und ein zweiter Sensor 42 zur Ermittlung von Fluidmasseverlusten in dem Hohlraum 39 der Radsatzwelle 31, wie sie z.B. bei einem Durchriss der Radsatzwelle 31 auftreten können, verbunden. Der erste Sensor 41 und der zweite Sensor 42 sind an einer Stirnseitenmitte des zweiten Wellenteils 35 angeordnet und ragen in den Hohlraum 39 hinein.

Der erste Sensor 41 ist als Drucksensor, der zweite Sensor 42 als Temperatursensor ausgebildet.

Mittels des ersten Sensors 41 und des zweiten Sensors 42 werden Drücke und Temperaturen des Fluids in dem Hohlraum 39 gemessen, und über eine Antenne 43, welche mit dem zweiten Wellenteil 35, dem ersten Sensor 41 und dem zweiten Sensor 42 verbunden ist, als Druckmesssignale und Temperaturmesssignale an eine Auswerteeinrichtung eines in Fig. 1 nicht gezeigten Wartungsstands übermittelt.

Erfindungsgemäß ist es jedoch auch möglich, dass die Auswerteeinrichtung in dem Schienenfahrzeug angeordnet ist.

Auf Grundlage der Druckmesssignale und der Temperaturmesssignale werden in der Auswerteeinrichtung Fluidaustritte aus dem Hohlraum 39, d.h. Fluidmasseverluste in dem Hohlraum 39, und auf Grundlage der Fluidaustritte etwaige Schäden oder Fehler des ersten Radsatzes 5 detektiert.

Auf Grundlage der Temperaturmesssignale werden zunächst Temperaturabhängigkeiten der Drücke kompensiert. Hierzu ist ein funktionaler Zusammenhang zwischen Druck und Temperatur nach dem Gesetz von Amontons mit einer Referenztemperatur in einer Datenbank der Auswerteeinrichtung gespeichert. In den funktionalen Zusammenhang werden die gemessenen Drücke und die gemessenen Temperaturen eingesetzt und es werden daraus mit der Referenztemperatur temperaturkompensierte Drücke ermittelt.

Unterschreiten die temperaturkompensierten Drücke einen definierten Druckschwellwert, so weist dies auf eine Leckage und somit auf einen Schaden oder Fehler des ersten Radsatzes 5 hin und es wird in der Auswerteeinrichtung ein Warnereignis (z.B. ein Hinweistext und/oder ein Warnsymbol etc.) gebildet.

Der zweite Radsatz ist konstruktiv und funktionell gleich wie der erste Radsatz 5 ausgebildet.

### Liste der Bezeichnungen

- 1: Fahrwerksrahmen
- 2: Antriebsmotor
- 3: Kupplung
- 4: Getriebe
- 5: Erster Radsatz
- 6: Erstes Radsatzlager
- 7: Zweites Radsatzlager
- 8: Erstes Radsatzlagergehäuse
- 9: Zweites Radsatzlagergehäuse
- 10: Erste Primärfeder
- 11: Zweite Primärfeder
- 12: Querträger
- 13: Erste Sekundärfeder
- 14: Zweite Sekundärfeder
- 15: Erstes Motorlager
- 16: Zweites Motorlager
- 17: Getriebegehäuse
- 18: Drehmomentstütze
- 19: Antriebswelle
- 20: Getriebewelle
- 21: Erstes Zahnrad
- 22: Zweites Zahnrad
- 23: Fahrwerksquerachse
- 24: Bremsscheibe
- 25: Erster Bremsbelag
- 26: Zweiter Bremsbelag
- 27: Bremsaktuator
- 28: Erster Bremshebel
- 29: Zweiter Bremshebel
- 30: Tragarm
- 31: Radsatzwelle
- 32: Erstes Rad
- 33: Zweites Rad
- 34: Erstes Wellenteil
- 35: Zweites Wellenteil
- 36: Drittes Wellenteil
- 37: Erste Schraube
- 38: Zweite Schraube
- 39: Hohlraum
- 40: Verschluss
- 41: Erster Sensor
- 42: Zweiter Sensor
- 43: Antenne

## Patentansprüche

1. Fahrwerk für Schienenfahrzeuge mit einem Fahrwerksrahmen (1), zumindest einem Antriebsmotor (2), zumindest einem Getriebe (4) und zumindest einem ersten Radsatz (5), welcher drehbar mit dem Fahrwerksrahmen (1) gekoppelt ist, wobei der zumindest eine Antriebsmotor (2) mit dem Fahrwerksrahmen (1) verbunden ist und wobei zur Drehmomentübertragung von dem zumindest einen Antriebsmotor (2) über das zumindest eine Getriebe (4) auf den zumindest ersten Radsatz (5) der zumindest eine Antriebsmotor (2) mit dem zumindest einen Getriebe (4) und das zumindest eine Getriebe (4) mit dem zumindest ersten Radsatz (5) gekoppelt ist, wobei zumindest ein mit zumindest einer Bremsscheibe (24) in Kontakt bringbarer Bremsaktuator (27) mit einem Getriebegehäuse (17) des zumindest einen Getriebes (4) verbunden ist, **dadurch gekennzeichnet, dass** die zumindest eine Bremsscheibe (24) mit einer Getriebewelle (20) des zumindest einen Getriebes (4) verbunden ist, und wobei, zur Erreichung eines kompakten Antriebsstrangs, eine Antriebswelle (19) des zumindest einen Antriebsmotors (2) mit der Getriebewelle (20) gekoppelt ist, wobei die Getriebewelle (20) mit einem ersten Zahnrad (21), welches mit dem zumindest ersten Radsatz (5) verbunden ist, gekoppelt ist.

2. Fahrwerk nach Anspruch 1, **dadurch gekennzeichnet, dass** der zumindest eine Bremsaktuator (27) über dessen Verbindung mit dem Getriebegehäuse (17) hinaus mit einer anderen Komponente des Fahrwerks oder anderen Komponenten des Fahrwerks als dem Getriebegehäuse (17) lediglich mittelbar, über das Getriebegehäuse (17) strukturell verbunden ist.

3. Fahrwerk nach Anspruch 1 oder 2, **dadurch gekennzeichnet, dass** der zumindest eine Antriebsmotor (2) als Asynchronmotor ausgebildet ist.

4. Fahrwerk nach einem der Ansprüche 1 bis 3, **dadurch gekennzeichnet, dass** der zumindest erste Radsatz (5) eine rohrförmig ausgeführte Radsatzwelle (31) aufweist.

5. Fahrwerk nach Anspruch 4, **dadurch gekennzeichnet, dass** die Radsatzwelle (31), zur Befüllung mit einem Fluid, abgedichtet ausgeführt ist.

6. Fahrwerk nach Anspruch 5, **dadurch gekennzeichnet, dass** das Fluid Druckluft ist.

7. Fahrwerk nach Anspruch 5 oder 6, **dadurch gekennzeichnet, dass** mit dem zumindest ersten Radsatz (5) zumindest ein erster Sensor (41) zur Ermittlung von Fluidmasseverlusten in einem Hohlraum (39) der Radsatzwelle (31) verbunden ist.

8. Fahrwerk nach einem der Ansprüche 4 bis 7, **dadurch gekennzeichnet, dass** die Radsatzwelle (31) mit einem ersten Rad (32) und einem zweiten Rad (33) des zumindest ersten Radsatzes (5) verschraubt ist.

9. Fahrwerk nach Anspruch 8, **dadurch gekennzeichnet, dass** die Radsatzwelle (31) zumindest ein erstes Wellenteil (34), ein zweites Wellenteil (35) und ein drittes Wellenteil (36) aufweist, wobei das erste Wellenteil (34) dem ersten Rad (32) und dem zweiten Rad (33) zwischengeordnet ist, wobei das zweite Wellenteil (35) und das dritte Wellenteil (36) außerhalb eines von dem ersten Rad (32) und dem zweiten Rad (33) begrenzten Bereichs angeordnet sind und wobei das erste Wellenteil (34) mit dem ersten Rad (32) und dem zweiten Rad (33), das zweite Wellenteil (35) mit dem ersten Rad (32) und das dritte Wellenteil (36) mit dem zweiten Rad (33) verbunden ist.

10. Fahrwerk nach Anspruch 9, **dadurch gekennzeichnet, dass** zumindest das erste Rad (32) mittels Schrauben mit dem ersten Wellenteil (34) und dem zweiten Wellenteil (35) verbunden ist, wobei die Schrauben von dem zweiten Wellenteil (35) durch das erste Rad (32) hindurch in das erste Wellenteil (34) geführt angeordnet sind.

11. Fahrwerk nach Anspruch 9 oder 10, **dadurch gekennzeichnet, dass** mit dem zweiten Wellenteil (35) ein erstes Radsatzlager (6) und mit dem dritten Wellenteil (36) ein zweites Radsatzlager (7) verbunden ist.

12. Fahrwerk nach einem der Ansprüche 1 bis 11, **dadurch gekennzeichnet, dass** die Antriebswelle (19) parallel oder annähernd parallel zu einer Fahrwerksquerachse (23) ausgerichtet ist.

13. Fahrwerk nach einem der Ansprüche 1 bis 12, **dadurch gekennzeichnet, dass** die Antriebswelle (19) über eine Kupplung (3) mit der Getriebewelle (20) gekoppelt ist.

14. Fahrwerk nach einem der Ansprüche 1 bis 13, **dadurch gekennzeichnet, dass** der Fahrwerksrahmen (1) primärgefedert mit dem zumindest ersten Radsatz (5) verbunden ist.

## Claims

1. Chassis for rail vehicles with a chassis frame (1), at least one drive motor (2), at least one transmission (4) and at least one first wheelset (5), which is coupled to the chassis frame (1) in a rotatable manner, wherein the at least one drive motor (2) is connected to the chassis frame (1) and wherein in order to transmit torque from the at least one drive motor (2) via the at least one transmission (4) to the at least first wheelset (5), the at least one drive motor (2) is coupled to the at least one transmission (4) and the at least one transmission (4) is coupled to the at least first wheelset (5), wherein at least one brake actuator (27) which can be brought into contact with at least one brake disc (24) is connected to a transmission housing (17) of the at least one transmission (4), **characterised in that** the at least one brake disc (24) is connected to a transmission shaft (20) of the at least one transmission (4), and wherein, in order to achieve a compact drive train, a drive shaft (19) of the at least one drive motor (2) is coupled to the transmission shaft (20), wherein the transmission shaft (20) is coupled to a first gear wheel (21) which is connected to the at least first wheelset (5).

2. Chassis according to claim 1, **characterised in that** the at least one brake actuator (27) is only indirectly structurally connected via the transmission housing (17), beyond its connection to the transmission housing (17), to another component of the chassis or other components of the chassis other than the transmission housing (17).

3. Chassis according to claim 1 or 2, **characterised in that** the at least one drive motor (2) is embodied as an asynchronous motor.

4. Chassis according to one of claims 1 to 3, **characterised in that** the at least first wheelset (5) has a wheelset shaft (31) which is designed in the shape of a tube.

5. Chassis according to claim 4, **characterised in that** the wheelset shaft (31) is designed to be sealed in order to be filled with a fluid.

6. Chassis according to claim 5, **characterised in that** the fluid is compressed air.

7. Chassis according to claim 5 or 6, **characterised in that** at least one first sensor (41) is connected to the at least first wheelset (5) in order to determine fluid mass losses in a cavity (39) of the wheelset shaft (31).

8. Chassis according to one of claims 4 to 7, **characterised in that** the wheelset shaft (31) is screwed to a first wheel (32) and a second wheel (33) of the at least first wheelset (5).

9. Chassis according to claim 8, **characterised in that** the wheelset shaft (31) has at least a first shaft part (34), a second shaft part (35) and a third shaft part (36), wherein the first shaft part (34) is arranged between the first wheel (32) and the second wheel (33), wherein the second shaft part (35) and the third shaft part (36) are arranged outside of a region delimited by the first wheel (32) and the second wheel (33), and wherein the first shaft part (34) is connected to the first wheel (32) and the second wheel (33), the second shaft part (35) is connected to the first wheel (32) and the third shaft part (36) is connected to the second wheel (33).

10. Chassis according to claim 9, **characterised in that** at least the first wheel (32) is connected to the first shaft part (34) and the second shaft part (35) by means of screws, wherein the screws are arranged guided from the second shaft part (35) through the first wheel (32) into the first shaft part (34).

11. Chassis according to claim 9 or 10, **characterised in that** a first wheelset bearing (6) is connected to the second shaft part (35) and a second wheelset bearing (7) is connected to the third shaft part (36).

12. Chassis according to one of claims 1 to 11, **characterised in that** the drive shaft (19) is aligned parallel or approximately parallel to a chassis transverse axis (23).

13. Chassis according to one of claims 1 to 12, **characterised in that** the drive shaft (19) is coupled to the transmission shaft (20) via a coupling (3).

14. Chassis according to one of claims 1 to 13, **characterised in that** the chassis frame (1) is connected with a primary spring-loaded suspension to the at least first wheelset (5).

## Revendications

1. Châssis pour véhicules ferroviaires avec un cadre de châssis (1), au moins un moteur d'entraînement (2), au moins une transmission (4) et au moins un premier train de roues (5), lequel est accouplé rotatif au cadre de châssis (1), dans lequel l'au moins un moteur d'entraînement (2) est relié au cadre de châssis (1) et dans lequel, pour le transfert de couple de l'au moins un moteur d'entraînement (2) par l'intermédiaire de l'au moins une transmission (4) à l'au moins un premier train de roues (5), l'au moins un moteur d'entraînement (2) est accouplé à l'au moins une transmission (4) et l'au moins une transmission (4) est accouplée à l'au moins un premier train de roues (5), dans lequel au moins un actionneur de frein (27) pouvant être mis en contact avec au moins un disque de frein (24) est relié à un carter de transmission (17) de l'au moins une transmission (4), **caractérisé en ce que** l'au moins un disque de frein (24) est relié à un arbre de transmission (20) de l'au moins une transmission (4), et dans lequel, pour l'obtention d'une chaîne cinématique compacte, un arbre d'entraînement (19) de l'au moins un moteur d'entraînement (2) est accouplé à l'arbre de transmission (20), dans lequel l'arbre de transmission (20) est accouplé à une première roue dentée (21), laquelle est reliée à l'au moins un premier train de roues (5).

2. Châssis selon la revendication 1, **caractérisé en ce que** l'au moins un actionneur de frein (27) est structuralement relié uniquement de manière indirecte, par l'intermédiaire du carter de transmission (17), par l'intermédiaire de sa liaison au carter de transmission (17), à un autre composant du châssis ou à d'autres composants du châssis que le carter de transmission (17).

3. Châssis selon la revendication 1 ou 2, **caractérisé en ce que** l'au moins un moteur d'entraînement (2) est conçu sous la forme d'un moteur asynchrone.

4. Châssis selon l'une des revendications 1 à 3, **caractérisé en ce que** l'au moins un premier train de roues (5) comprend un arbre de train de roues (31) de configuration tubulaire.

5. Châssis selon la revendication 4, **caractérisé en ce que** l'arbre de train de roues (31), pour le remplissage avec un fluide, est configuré de manière étanche.

6. Châssis selon la revendication 5, **caractérisé en ce que** le fluide est de l'air comprimé.

7. Châssis selon la revendication 5 ou 6, **caractérisé en ce qu'**au moins un premier capteur (41) est relié à l'au moins premier train de roues (5) pour la détermination de pertes de masse de fluide dans une cavité (39) de l'arbre de train de roues (31).

8. Châssis selon l'une des revendications 4 à 7, **caractérisé en ce que** l'arbre de train de roues (31) est vissé avec une première roue (32) et une deuxième roue (33) de l'au moins un premier train de roues (5).

9. Châssis selon la revendication 8, **caractérisé en ce que** l'arbre de train de roues (31) comprend au moins une première partie d'arbre (34), une deuxième partie d'arbre (35) et une troisième partie d'arbre (36), dans lequel la première partie d'arbre (34) est disposée entre la première roue (32) et la deuxième roue (33), dans lequel la deuxième partie d'arbre (35) et la troisième partie d'arbre (36) sont disposées en dehors d'une zone délimitée par la première roue (32) et la deuxième roue (33) et dans lequel la première partie d'arbre (34) est reliée à la première roue (32) et à la deuxième roue (33), la deuxième partie d'arbre (35) est reliée à la première roue (32) et la troisième partie d'arbre (36) est reliée à la deuxième roue (33).

10. Châssis selon la revendication 9, **caractérisé en ce qu'**au moins la première roue (32) est reliée à la première partie d'arbre (34) et à la deuxième partie d'arbre (35) au moyen de vis, dans lequel les vis sont disposées en étant guidées de la deuxième partie d'arbre (35) à travers la première roue (32) jusque dans la première partie d'arbre (34).

11. Châssis selon la revendication 9 ou 10, **caractérisé en ce qu'**un premier palier de train de roues (6) est relié à la deuxième partie d'arbre (35) et un deuxième palier de train de roues (7) est relié à la troisième partie d'arbre (36).

12. Châssis selon l'une des revendications 1 à 11, **caractérisé en ce que** l'arbre d'entraînement (19) est orienté parallèlement ou presque parallèlement à un axe transversal de châssis (23).

13. Châssis selon l'une des revendications 1 à 12, **caractérisé en ce que** l'arbre d'entraînement (19) est accouplé à l'arbre de transmission (20) par l'intermédiaire d'un embrayage (3).

14. Châssis selon l'une des revendications 1 à 13, **caractérisé en ce que** le cadre de châssis (1) est relié à l'au moins un premier train de roues (5) par suspension primaire.
